# EUROPÄISCHE PATENTANMELDUNG

(11) **EP 4 728 859 A1**
(43) Veröffentlichungstag der Anmeldung: **22.04.2026**
(21) Anmeldenummer: 25209500.5
(22) Anmeldetag: 17.10.2025
(51) Int. Cl.: A01K 31/04, A01K 31/17

(54) **HALTUNGSSYSTEM ZUR AUFZUCHT UND HALTUNG VON GEFLÜGELTIEREN SOWIE ABSTREIFELEMENT EINES KOTSCHIEBERS FÜR EIN SOLCHES HALTUNGSSYSTEM**

(30) Priorität: 18.10.2024 LU 508593
(71) Anmelder: Big Dutchman International GmbH, 49377 Vechta (DE)
(72) Erfinder: LEY, Andre, 49377 Vechta (DE); KÜKING, Jörg, 48496 Hopsten (DE)
(74) Vertreter: Eisenführ Speiser

(57) **Zusammenfassung**

Die Erfindung betrifft ein Haltungssystem (10) zur Aufzucht und Haltung von Geflügeltieren, mit einem Rahmengestell (12), und mehreren auf verschiedenen Höhen des Rahmengestells (12) angeordneten Aufenthaltsebenen (14, 14') für den Aufenthalt der Tiere, wobei unterhalb wenigstens einer, insbesondere mehreren der Aufenthaltsebenen (14, 14') eine Kotauffangeinrichtung (16) mit einem im Wesentlichen horizontal verlaufenden Kotauffangelement (18) angeordnet ist, und wobei jeder Kotauffangeinrichtung (16) wenigstens eine oberhalb des Kotauffangelements (18) bewegbare Kotabführeinheit (20) mit mindestens einem die Exkremente an der Oberseite (22) des Kotauffangelements (16) abführenden Kotschieber (24) zugeordnet ist.

Der Kotschieber (24) weist ein Abstreifelement (28) auf, welches eine mit der Oberseite (22) des Kotauffangelements (16) in Anlage stehende Abstreifkante (30) mit einer verzahnten Kontur (32) aufweist.

## Beschreibung

Die Erfindung betrifft ein Haltungssystem zur Aufzucht und Haltung von Geflügeltieren, mit einem Rahmengestell, und mehreren auf verschiedenen Höhen des Rahmengestells angeordneten Aufenthaltsebenen für den Aufenthalt der Tiere, wobei unterhalb wenigstens einer, insbesondere mehreren der Aufenthaltsebenen eine Kotauffangeinrichtung mit einem im Wesentlichen horizontal verlaufenden Kotauffangelement angeordnet ist, und wobei jeder Kotauffangeinrichtung wenigstens eine oberhalb des Kotauffangelements bewegbare Kotabführeinheit mit mindestens einem den Kot an der Oberseite des Kotauffangelements abführenden Kotschieber zugeordnet ist. Zudem betrifft die Erfindung auch ein Abstreifelement eines Kotschiebers für eine Kotabführeinheit an einem Haltungssystem für Geflügeltiere.

Für die Haltung von Geflügeltieren, insbesondere Legehennen, sind Haltungssysteme mit mehreren Etagen bekannt. Die bekannten Haltungssysteme sind üblicherweise in einem Stall oder einem hallenartigen Gebäude aufgestellt. Die Haltungssysteme können sowohl als offene Systeme wie auch als geschlossene Systeme ausgebildet sein. Die geschlossenen Systeme sind insofern gegenüber den offenen Systemen von Vorteil, als die während der Haltung der Geflügeltiere abgeschiedenen Exkremente, insbesondere Kot oder dergleichen, nicht unkontrolliert im gesamten Stall oder Gebäude verteilt werden.

Aus Gründen des Tierwohls hat sich als vorteilhaft herausgestellt, dass Geflügeltiere in den geschlossenen Systemen deutlich weniger mit den ausgeschiedenen Exkrementen in Kontakt gelangen, sodass Krankheiten in geringerem Maße bei der Haltung in einem geschlossenen System auftreten. Um insbesondere die bei der Haltung der Geflügeltiere anfallenden Exkremente, insbesondere Kot, kontrolliert aufzufangen und abzuführen, ist unterhalb wenigstens einer, insbesondere mehreren oder jeder der Aufenthaltsebenen an einem Haltungssystem eine Kotauffangeinrichtung mit einem im Wesentlichen horizontal verlaufenden Kotauffangelement vorgesehen.

Auf dem sich vorzugsweise wenigstens über die Gesamtlänge der Aufenthaltsebene erstreckenden Kotauffangelement werden die Exkremente der auf den Aufenthaltsebenen gehaltenen Tiere gesammelt. Mittels wenigstens einer oberhalb des Kotauffangelements bewegbaren Kotabführeinheit, welche einen Kotschieber aufweist, wird der auf der Oberseite des Kotauffangelements befindliche Kot in vordefinierten Zeitabständen kontrolliert abgeführt. Der Kotschieber weist dazu ein mit der Oberseite des Kotauffangelements in Anlage stehendes Abstreifelement auf, das üblicherweise mit seiner Gesamtlänge mit der Oberseite des Kotauffangelements in Anlage steht. Es hat sich jedoch gezeigt, dass mit den bekannten Kotabführeinheiten nur ein mäßiger Reinigungseffekt an dem Kotauffangelement erzielt wird.

Der Erfindung liegt daher die Aufgabe zugrunde, ein Haltungssystem der eingangs genannten Art derart weiterzubilden, dass an dieser, speziell an dem Kotauffangelement der Kotauffangeinrichtung, eine verbesserte Reinigungswirkung erzielt werden kann.

Die Erfindung löst die ihr zugrundeliegende Aufgabe bei einem Haltungssystem zur Aufzucht und Haltung von Geflügeltieren mit den Merkmalen nach Anspruch 1. Insbesondere weist der Kotschieber der Kotabführeinheit ein Abstreifelement auf, welches eine mit der Oberseite des Kotauffangelements in Anlage stehende Abstreifkante mit einer verzahnten Kontur aufweist.

Damit schlägt die Erfindung, entgegen dem allgemeinen Verständnis vor, anstatt ein Abstreifelement mit einer durchgängigen Abstreifkante zu verwenden, nunmehr die Abstreifkante an dem Abstreifelement mit einer verzahnten Kontur bzw. einer Verzahnung zu versehen. Mittels des erfindungsgemäßen Abstreifelements ist bewirkt, dass, bezogen auf die Gesamtlänge des Abstreifelements am Kotschieber, dieses nur noch mit einem vorbestimmten Anteil seiner Gesamtlänge direkt mit der Oberseite des Kotauffangelements in Anlage steht. Dadurch ist an dem erfindungsgemäßen Abstreifelement eine deutlich kleinere Anpressfläche ausgebildet, die jedoch in Verbindung mit der weiterhin unverändert gleich großen Anpresskraft die Oberseite des Kotauffangelements effektiver reinigt. Während der Haltung der Geflügeltiere sind somit weniger Reinigungsvorgänge an der Kotauffangeinrichtung vonnöten, um das Kotauffangelement unterhalb einer Aufenthaltsebene in gewünschtem Maße von den sich darauf ansammelnden Exkrementen zu befreien.

Gemäß einer bevorzugten Weiterbildung weist das Abstreifelement einen Blattkörper mit zumindest einem Befestigungsabschnitt und einen die Abstreifkante aufweisenden, dem Kotauffangelement zugewandten Schieberabschnitt auf. Mithilfe des Befestigungsabschnitts am Abstreifelement, welcher sich vorzugsweise über dessen Gesamtlänge erstreckt, kann das Abstreifelement über insbesondere mehrere Befestigungspunkte sicher an beispielsweise einem stabförmigen Halteelement des Kotschiebers befestigt werden. Der Schieberabschnitt am Abstreifelement, der die Abstreifkante aufweist, bildet einen separaten, jedoch einteilig mit dem Befestigungsabschnitt verbundenen Teil des Abstreifelements aus. Der Schieberabschnitt, an dem die Abstreifkante mit ihrer verzahnten Kontur ausgebildet ist, ist bevorzugt entlang einer dem Kotauffangelement zugewandten Längsseite des Befestigungsabschnitts angeordnet.

Gemäß einer bevorzugten Ausgestaltung des Haltungssystems ist der Befestigungsabschnitt im Betrieb des Abstreifelements im Wesentlichen vertikal ausgerichtet und der Schieberabschnitt mit seiner verzahnten Abstreifkante verläuft in einem Winkel α im Bereich von 91° - 180° zum Befestigungsabschnitt. Mit der im Betrieb vertikalen Ausrichtung des Befestigungsabschnitts ist eine vorteilhafte Schiebewirkung auf die am Kotauffangelements gelösten Exkremente mittels des Abstreifelements erzielt Der Befestigungsabschnitt wird vorzugsweise mit einem das Abstreifelement aufnehmenden, stabförmigen Halteelement verbunden. Für eine verbesserte Reinigung am Kotauffangelement ist der Schieberabschnitt, mittels dessen die Exkremente, insbesondere der Kot, am Kotauffangelement gelöst werden soll, schräg zum im Betrieb vertikal verlaufenden Befestigungsabschnitt ausgerichtet. Insbesondere erstreckt sich der Schieberabschnitt mit seiner verzahnten Abstreifkante in Bewegungsrichtung des Kotschiebers schräg nach vorne, was das Lösen bzw. Abheben der Exkremente an der Oberseite des Kotauffangelements weiter verbessert. In einer bevorzugten Ausführung verläuft der Schieberabschnitt in einem Winkel α von etwa 135° zum Befestigungsabschnitt.

Eine Weiterbildung des Haltungssystems sieht vor, dass die verzahnte Kontur abwechselnd aus vorspringenden Zähnen, welche mit dem Kotauffangelement in Kontakt stehen, und zurückspringenden Zahnzwischenräumen ausgebildet ist. Vorzugsweise weist ein solches mit einer verzahnten Kontur ausgerüstetes Abstreifelement eine Vielzahl von entlang der Abstreifkante sich in Bewegungsrichtung schräg nach vorne erstreckenden Zähnen auf. In einer bevorzugten Ausgestaltung weist das Abstreifelement an seiner Abstreifkante mehr als 20, bevorzugt mehr als 30 solcher Zähne auf. Bevorzugt sind die am Schieberabschnitt vorspringenden Zähne gleichmäßig daran verteilt angeordnet. Mittels eines zwischen zwei zueinander benachbarten Zähnen zurückspringenden Zahnzwischenraums ist eine ausreichend tiefe Ausnehmung an der Abstreifkante ausgebildet, mittels derer der nur anteilige Kontakt der Abstreifkante mit dem Kotauffangelement gewährleistet ist. In einer möglichen Ausführung weist das Abstreifelement des erfindungsgemäßen Haltungssystems bei einer Gesamtlänge von etwa 1,3 m eine Anzahl von 32 mit dem Kotauffangelement in Kontakt stehenden Zähnen auf.

Gemäß einer bevorzugten Ausführung der Erfindung ist die verzahnte Kontur an der Abstreifkante, bezogen auf die Längsachse des Abstreifelements, asymmetrisch ausgebildet. Durch die asymmetrische Ausgestaltung ist in Verbindung mit einer weiter unten beschriebenen schwenkbaren Aufnahme des Kotschiebers eine Reinigung von verschiedenen Bereichen an der Oberseite des Kotauffangelements möglich. Trotz der verringerten Kontaktfläche an der Abstreifkante durch die Verzahnung ist eine effektive Reinigung nahezu der gesamten Oberseite des Kotauffangelements bewirkt. Die Längsachse des Abstreifelements fällt vorliegend genau in einen Übergangsbereich von einem Zahn auf einen Zahnzwischenraum und liegt vorzugsweise auf einer im Wesentlichen senkrecht zur Abstreifkante verlaufenden Zahnflanke. Alternativ kann die verzahnte Kontur auch symmetrisch am Kotschieber ausgebildet sein, wobei der symmetrisch ausgeführte Kotschieber für eine ganzflächige Reinigung der Oberfläche des Kotauffangelements mittels der Schwenkeinheit dann asymmetrisch aufgenommen wird.

Vorzugsweise weisen die Zahnzwischenräume an der verzahnten Abstreifkante in Längsrichtung des Abstreifelements Abmessungen aufweisen, die wenigstens dem 0,3-Fachen, vorzugsweise dem 0,9-Fachen, besonders bevorzugt mehr als dem 1,2-Fachen der Abmessungen der am Schieberabschnitt in Richtung des Kotauffangelements vorspringenden Zähne entsprechen. Vorzugsweise weisen die Zahnzwischenräume eine Zahnzwischenraumbreite auf, die mindestens dem 0,3-Fachen, vorzugsweise dem 0,9-Fachen der Zahnbreite der Zähne entspricht, bevorzugt mindestens um das 1,2-Fache größer ist als die Zahnbreite. In der vorliegend gezeigten Ausführung weist die mittels der in Bewegungsrichtung des Abstreifelements schräg nach vorne vorspringenden Zähne ausgebildete Kontaktfläche zur Gesamtlänge des Abstreifelements ein Verhältnis im Bereich von etwa 0,8 bis < 0,5, bevorzugt von etwa 0,45 auf. Speziell bei einem Verhältnis von Zahnbreite zu Zahnzwischenraumbreite < 0,5 wird beim Bewegen des Abstreifelements während eines Reinigungsvorgangs, der sich aus zwei Einzelbewegungen des Abstreifelements über die Oberseite des Kotauffangelements zusammensetzt, nicht die gesamte Oberfläche des Kotauffangelements direkt gereinigt. Jedoch haben Tests gezeigt, dass durch den beim Überfahren des Kotauffangelements entstehenden Mitnahmeeffekt benachbarte Bereiche der unmittelbar mit den Zähnen in Kontakt kommenden Exkremente mitgerissen werden, sodass die Reinigungsfunktion der Zähne breiter ausfällt als die Zahnbreite.

Vorzugsweise weist der Blattkörper einen Abwurfabschnitt auf, der die der Abstreifkante gegenüberliegende Blattoberseite des Blattkörpers ausbildet. Mithilfe des Abwurfabschnitts, der am Befestigungsabschnitt gegenüberliegend zum Schieberabschnitt angeordnet ist, erfolgt insbesondere bei einer Bewegung des Abstreifelements oberhalb des Kotauffangelements ein in Bewegungsrichtung gerichteter Abwurf sich möglicherweise vor dem Abstreifelement auftürmender bzw. hochschiebender Exkremente mit einigem Abstand vor den Kotschieber während dessen Bewegung. Damit soll insbesondere einem Überwinden der Oberkante des Abstreifelements durch die Exkremente entgegengewirkt und ein möglicher Kontakt der Exkremente mit dem Abstreifelement nachgelagerten Teilen des Kotschiebers vermieden werden. Speziell der Reinigungsaufwand an der regelmäßig zu reinigenden Kotabführeinheit verringert sich mit Vorteil.

Eine Weiterbildung des Haltungssystems sieht vor, dass der Abwurfabschnitt in einem Winkel im Bereich von 91°-180° zum Befestigungsabschnitt verläuft und sich in Längsrichtung des Abstreifelements vorzugsweise nur entlang einer Teillänge des Befestigungsabschnitts erstreckt. Mit seiner schrägen oder auch parallelen Ausrichtung in einem Winkelbereich von 91°-180° zum Befestigungsabschnitt, bevorzugt mit einer Ausrichtung im Winkel von etwa 135°, erfolgt beim Bewegen des Abwurfelements oberhalb des Kotauffangelements ein optimierter Abwurf der an der Oberseite des Kotauffangelements abgeführten Exkremente in Bewegungsrichtung. Damit wird die Reinigung des Kotauffangelements an der Kotauffangeinrichtung des Haltungssystems noch effizienter gestaltet. Zudem wird die Steifigkeit des Blattkörpers durch die winklig am Befestigungsabschnitt abstehenden Schieber- und Abwurfabschnitte erhöht. Vorzugsweise erstreckt sich der Abwurfabschnitt, ähnlich wie der an der entgegengesetzten Längsseite angeordnete Schieberabschnitt, zum Befestigungsabschnitt und in Bewegungsrichtung des Kotschiebers in einem Winkel schräg nach vorne.

Vorzugsweise erstreckt sich der nach vorne gerichtete Abwurfabschnitt nur über eine Teillänge des Befestigungsabschnitts. Beispielsweise sind in einer Ausführung die Endbereiche des Abstreifelements jeweils ohne den an der Oberseite des Befestigungsabschnitts abstehenden Abwurfabschnitt ausgebildet. Damit ist eine vorteilhafte Freigängigkeit in Verbindung mit einer weiter unten zur Kotabführeinheit beschriebenen Schwenkbewegung des Kotschiebers an der Kotabführeinheit erreicht.

Gemäß einer bevorzugten Ausführung weist die Kotabführeinheit eine Antriebseinheit zum Bewegen des Kotschiebers in Längsrichtung des Kotauffangelements auf, wobei das Abstreifelement im Betrieb in einem Winkel schräg zur Längsrichtung des Kotauffangelements ausgerichtet ist. Die Antriebseinheit ist dazu eingerichtet, die Kotabführeinheit oberhalb des Kotauffangelements der Kotauffangeinrichtung in entgegengesetzte Richtungen in Längsrichtung des Kotauffangelements zu bewegen. Beispielsweise wird ein Reinigungsprozess durch ein Hin- und Herfahrt der Kotabführeinrichtung oberhalb des Kotauffangelements definiert. Vorzugsweise wird die Kotabführeinheit aus einer Ausgangsstellung am Kotauffangelement in einer Hinbewegung in Längsrichtung zum Kotauffangelement bewegt. Nach Erreichen einer Umkehrposition wird die Kotabführeinheit mit dem Kotschieber in einer Rückbewegung zurück zu ihrer Ausgangsstellung bewegt. Während des Reinigungsvorgangs weist das Abstreifelement, insbesondere dessen Längsachse und damit der Kotschieber, eine schräge Ausrichtung zur Längsachse des darunter angeordneten Kotauffangelements auf. Beim Bewegen des Kotschiebers über die Oberseite des Kotauffangelements werden gelöste Exkremente über wenigstens eine als Abwurfkante ausgebildete Längsseite des Kotauffangelements abgeführt, die dann in einer unterhalb des Haltungssystems ausgebildeten Güllegrube gesammelt werden.

Gemäß einer bevorzugten Weiterbildung weist die Kotabführeinheit eine Schwenkeinheit zum Ändern der Ausrichtung des Kotschiebers relativ zum Kotauffangelement in Abhängigkeit von der Bewegungsrichtung des Kotschiebers oberhalb des Kotauffangelements auf. Die Schwenkeinheit wirkt unmittelbar mit dem Kotschieber zusammen und verstellt dessen Ausrichtung bezogen auf die Oberseite des Kotauffangelements um eine im Wesentlichen senkrecht zur Oberseite ausgerichtete Schwenkachse. Vorzugsweise weist das Abstreifelement und damit der Kotschieber, der insbesondere beweglich an einem Haltegestell der Kotabführeinheit aufgenommen ist, eine Ausrichtung in einem Winkel von etwa 20° zur Längsseite des Kotauffangelements auf. Die Schwenkeinheit ist dazu eingerichtet, das Abstreifelement mit seinem dem in Bewegungsrichtung gesehen, vorderen Ende des Kotschiebers beabstandet zur Abwurfkante für die Exkremente am Kotauffangelement anzuordnen. Das in Bewegungsrichtung hintere Ende des Kotschiebers endet unmittelbar an der Abwurfkante des Kotauffangelements bzw. steht zumindest ein Stück weit darüber hinaus. Vorzugsweise weist der Schwenkeinheit ein über Umlenkrollen geführtes Zugelement auf, welches mit entsprechenden Abschnitten des Kotschiebers zu beiden Seiten der Schwenkachse befestigt ist. Durch Verstellen des mit dem Kotschieber zusammenwirkenden Zugelements wird dieser in die jeweils zur Bewegungsrichtung des Kotschiebers verknüpfte Ausrichtung oberhalb des Kotauffangelements überführt.

Eine bevorzugte Ausführungsform des Haltungssystems sieht vor, dass der Kotschieber durch Ändern seiner Ausrichtung in Verbindung mit einer/der asymmetrischen Ausgestaltung der verzahnten Abstreifkante, bevorzugt einer asymmetrischen Anordnung der verzahnten Abstreifkante zu einer mittels der Schwenkeinheit definierten Schwenkachse, dazu eingerichtet ist, bei seiner Bewegung in entgegengesetzte Richtungen des Kotauffangelements mit unterschiedlichen Flächenbereichen des Kotauffangelements in Anlage zu stehen. Mit der erfindungsgemäßen Ausgestaltung ist gewährleistet, dass trotz der verzahnt ausgebildeten Abstreifkante, welche sowohl asymmetrisch oder auch symmetrisch am Kotschieber ausgeführt sein kann, nahezu die gesamte Oberseite des Kotauffangelements während des Reinigungsvorganges und einer damit verbundenen Hin- und Rückbewegung der Kotabführeinheit oberhalb des Kotauffangelements von den bei der Haltung der Geflügeltiere anfallenden Exkrementen befreit wird. Mit der Ausgestaltung einer verzahnten Abstreifkante am Kotschieber in Verbindung mit der asymmetrischen Ausgestaltung, insbesondere dem asymmetrischen Anordnen der Abstreifkante zur Schwenkachse und dem Verschwenken des Kotschiebers in Abhängigkeit von seiner Bewegungsrichtung ist eine gegenüber dem bekannten Stand der Technik effizientere Reinigung der Kotauffangelemente möglich, sodass die notwendige Anzahl an Reinigungsprozessen pro Zeiteinheit verringert werden kann.

Gemäß einer bevorzugten Ausführung des Haltungssystems erfolgt mit Ändern der Ausrichtung des Kotschiebers bei seiner Bewegung in entgegengesetzte Richtungen oberhalb des Kotauffangelements eine Anpassung der Kontaktposition zwischen der Oberseite des Kotauffangelements und dem Kotschieber. Vorzugsweise ist durch die verzahnte Ausgestaltung der Abstreifkante bei Ändern der Ausrichtung des Kotschiebers, was bevorzugt mittels der Schwenkeinheit umgesetzt ist, und somit beim Hin- und Herbewegen bewirkt, dass die verzahnte Abstreifkante, insbesondere bezogen auf die Längsseiten des Kotauffangelements, unterschiedliche Kontaktpositionen oberhalb des Kotauffangelements einnimmt, also mit unterschiedlichen Flächenbereichen des Kotauffangelements in Kontakt kommt. Dadurch ist sichergestellt, dass trotz der verzahnten Ausführung des Kotschiebers beim Hin- und Herbewegen des Kotschiebers die gesamte Fläche des Kotauffangelements von Kot gereinigt wird.

Eine mögliche Ausgestaltung des Haltungssystems sieht vor, dass das Kotauffangelement einen Bandkörper aufweist, der an zumindest einem seiner Enden mit einer Spanneinrichtung zum Spannen des Bandkörpers in Längsrichtung ausgerüstet ist. Vorzugsweise wird als Kotauffangelement ein aus einem Kunststoffmaterial ausgebildeter Bandkörper verwendet. Um dem Durchhängen des Kotauffangelements wegen seiner in Richtung der Schwerkraft wirkenden Masse entgegenzuwirken und so einen dauerhaft ungestörten Kontakt zwischen dem Kotauffangelement und der oberhalb des Kotauffangelements verfahrbaren Kotabführeinheit zu gewährleisten, wirkt wenigstens ein Endabschnitt des Kotauffangelements mit einer Spanneinrichtung zum Spannen des Bandkörpers in Längsrichtung zusammen. Die Spanneinrichtung umfasst wenigstens ein, insbesondere mehrere in Längsrichtung des Bandkörpers wirkende Federelemente. Die Federelemente erzeugen eine ausreichend hohe Vorspannkraft des Kotauffangelements und wirken damit dem Durchhängen des Kotauffangelements entgegen. Vorzugsweise wird das Kotauffangelement zusätzlich entlang vorbestimmter Abschnitte durch entsprechende, am Rahmengestell ausgebildete Stützstrukturen von seiner Unterseite aus abgestützt.

Gemäß einer bevorzugten Ausgestaltung des Haltungssystems sind mehrere Aufenthaltsebenen auf gleicher Höhe nebeneinander mit je einer Kotauffangeinrichtung am Rahmengestell angeordnet. Vorzugsweise weist ein Haltungssystem mindestens zwei auf gleicher Höhe angeordnete Aufenthaltsebenen für die Geflügeltiere auf, wobei für jede der auf gleicher Höhe benachbart zueinander angeordneten Aufenthaltsebenen eine eigene Kotauffangeinrichtung mit einer daran angeordneten Kotabführeinheit vorgesehen ist. Vorzugsweise bilden insbesondere die einander zugewandten Längsseiten der benachbart nebeneinander angeordneten Kotauffangelemente die Abwurfkanten für die mittels der Kotabführeinheiten von den Kotauffangelementen abzuführenden Exkremente der Geflügeltiere aus. In einer möglichen Ausgestaltung des erfindungsgemäßen Haltungssystems ist vorgesehen, dass die Kotabführeinheiten an den nebeneinander angeordneten Kotauffangelementen im Betrieb, also bei Umsetzung eines Reinigungsvorgangs, jeweils in entgegengesetzte Richtungen zueinander bewegt werden. Somit haben beide Kotabführeinheiten ihre Ausgangsstellungen an voneinander abgewandten Ende der Kotauffangeinrichtungen. Vorzugsweise erstrecken sich die Kotauffangeinrichtungen zu beiden Seiten der jeweils darüber angeordneten Aufenthaltsebenen um zumindest einen vorbestimmten Verfahrbereich für die Kotabführeinheiten hinaus, welche die Ausgangsstellung für die Kotabführeinheit bzw. deren Umkehrposition definieren.

Gemäß einem zweiten Aspekt betrifft die Erfindung ein Abstreifelement eines Kotschiebers für eine Kotabführeinheit an einem Haltungssystem für Geflügeltiere.

Die Erfindung löst an dem Abstreifelement auch die zum erfindungsgemäßen Haltungssystem zugrunde gelegte Aufgabe, indem das Abstreifelement eine mit der Oberseite des Kotauffangelements in Anlage stehende Abstreifkante mit einer verzahnten Kontur aufweist. Ein derart erfindungsgemäß ausgebildetes Abstreifelement steht somit bezogen auf seine Gesamtlänge nur noch mit einem vorbestimmten Längenanteil seiner Gesamtlänge direkt mit einer Oberseite eines Kotauffangelements in Anlage. Das erfindungsgemäß ausgebildete Abstreifelement weist gegenüber den bekannten Abstreifelementen eine verkleinerte Anpressfläche auf, wodurch bei gleicher Anpresskraft sich eine deutlich verbesserte Reinigungswirkung an der Oberseite des Kotauffangelements erzielen lässt. Mit einem solch erfindungsgemäßen Abstreifelement sind über eine vorbestimmte Zeitspanne weniger Reinigungsvorgänge an der Kotauffangeinrichtung vonnöten, mittels derer das Kotauffangelement insbesondere zyklisch von den bei der Haltung entstehenden Exkrementen gereinigt wird.

In noch einem weiteren Aspekt betriff die Erfindung die Verwendung eines Abstreifelements nach einer der vorstehend beschriebenen bevorzugten Ausführungsformen zum Abführen von Kot an der Oberseite eines Kotauffangelements an einem Haltungssystem für Geflügeltiere, wobei vorzugsweise das Abstreifelement mit seiner verzahnten Abstreifkante beim Bewegen in entgegengesetzte Richtungen und dem Abführen des Kots oberhalb des Kotauffangelements mit verschiedenen Flächenbereichen des Kotauffangelements in Anlage steht. Mit der Verwendung eines solche erfindungsgemäß ausgebildeten Abstreifelements ist zum einen eine vereinfachte und damit effiziente Reinigung eines unterhalb einer Aufenthaltsebene in einem Haltungssystem für Geflügeltiere angeordneten Kotauffangelements möglich. Zudem ist mit Verwendung eines derartigen Abstreifelements die Reinigung einer Kotauffangeinrichtung an einem Haltungssystem im Vergleich zu den bekannten Lösungen mit einer deutlich verringerten Anzahl an Reinigungsprozessen über einen vorbestimmten Zeitraum erzielt, womit der Aufwand für eine solche Reinigung minimiert ist.

Die zum erfindungsgemäßen Haltungssystem beschriebenen, bevorzugten Ausführungsformen bzw. Weiterbildungen sind zugleich auch bevorzugte Ausführungsformen des erfindungsgemäßen Abstreifelements an einer Kotabführeinheit sowie der erfindungsgemäßen Verwendung eines solchen Abstreifelements zum Abführen von Kot an der Oberseite eines Kotauffangelements. Die zum erfindungsgemäßen Abstreifelement bzw. zur Verwendung des Abstreifelements beschriebenen, bevorzugten Ausführungsformen bzw. Weiterbildungen sind zugleich auch bevorzugte Ausführungsformen des Haltungssystems.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht eines erfindungsgemäßen Haltungssystems zur Aufzucht und Haltung von Geflügeltieren;
- Fig. 2:: eine perspektivische Ansicht eines erfindungsgemäßen Abstreifelements für eine Kotabführeinheit an dem Haltungssystem nach Fig. 1;
- Fig. 3:: eine Seitenansicht des erfindungsgemäßen Abstreifelements nach Fig. 2;
- Fig. 4:: eine perspektivische Ansicht einer unterhalb einer Aufenthaltsebene des Haltungssystems angeordneten Kotauffangeinrichtung nach Fig.1, und
- Fig. 5 und 6:: perspektivische Ansichten, welche den Reinigungsprozess der Kotauffangeinrichtung mittels einer darauf bewegbaren Kotabführeinheit zeigen.

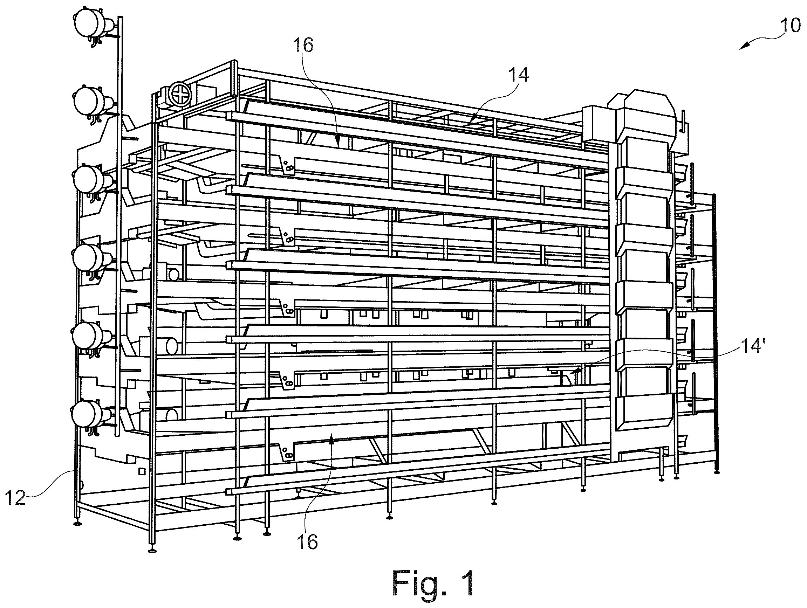

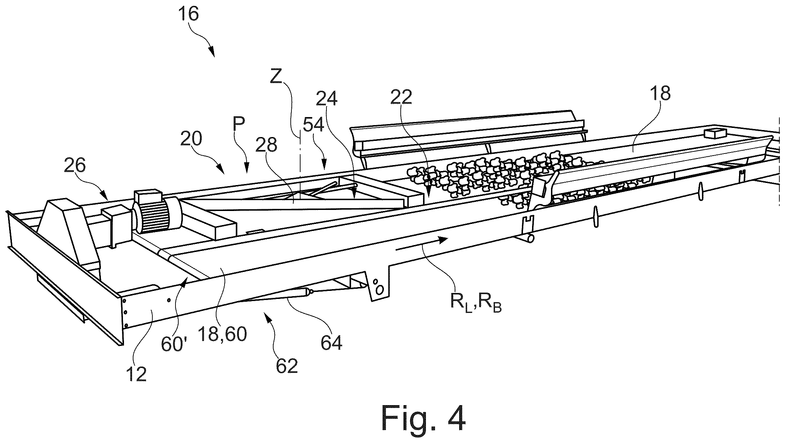

Fig. 1 zeigt ein Haltungssystem 10 zur Aufzucht und Haltung von Geflügeltieren mit einem Rahmengestell 12 und mehreren auf verschiedenen Höhen des Rahmengestells 12 angeordneten Aufenthaltsebenen 14, 14' für den Aufenthalt der Geflügeltiere. Unterhalb wenigstens einer, insbesondere mehreren der Aufenthaltsebenen 14, 14' ist eine Kotauffangeinrichtung 16 angeordnet. Jede Kotauffangeinrichtung 16 weist, wie in Verbindung mit Fig. 4 zu entnehmen, wenigstens ein im Wesentlichen horizontal verlaufendes Kotauffangelement 18 auf.

Jeder Kotauffangeinrichtung 16 ist wenigstens eine oberhalb des Kotauffangelements 18 bewegbare Kotabführeinheit 20 mit mindestens einem die Exkremente an der Oberseite 22 des Kotauffangelements 18 abführenden Kotschieber 24 (Fig. 4) zugeordnet. Die Kotabführeinheit 20 weist eine Antriebseinheit 26 zum Bewegen des Kotschiebers 24 in Längsrichtung R_{L} des Kotauffangelements 18 auf.

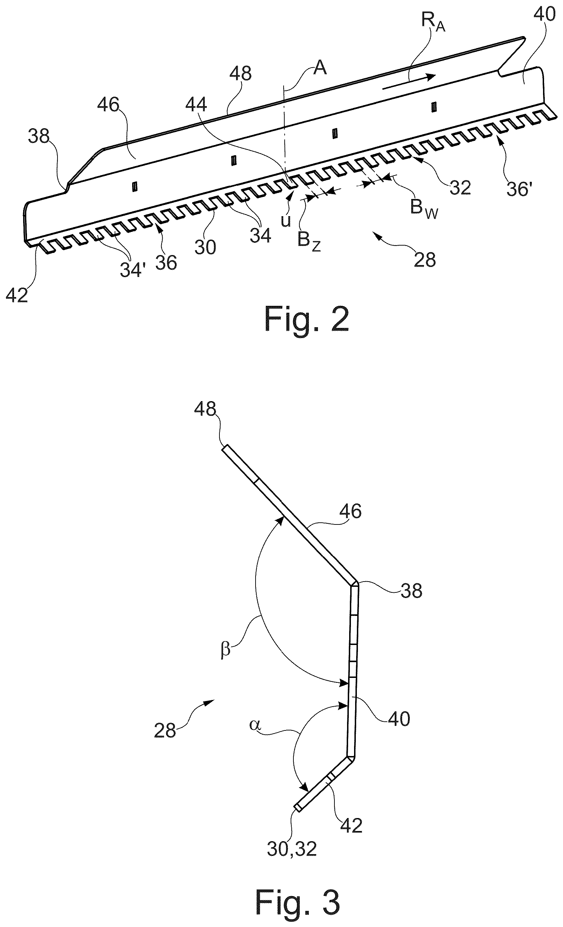

Der in Fig. 4 abgebildete Kotschieber 24 weist ein in Fig. 2 gezeigtes Abstreifelement 28 auf, welches eine mit der Oberseite 22 des Kotauffangelements 18 in Anlage stehende Abstreifkante 30 mit einer verzahnten Kontur 32 aufweist. Die verzahnte Kontur 32 wird abwechselnd aus vorspringenden Zähnen 34, 34', welche direkt mit der Oberseite 22 des Kotauffangelements 18 in Kontakt stehen, und zurückspringenden Zahnzwischenräumen 36, 36' ausgebildet.

Das Abstreifelement 28 umfasst einen Blattkörper 38 mit einem Befestigungsabschnitt 40, der im Betrieb des Abstreifelements 28 im Wesentlichen vertikal ausgerichtet ist bzw. verläuft. Am Blattkörper 38 ist ferner ein die Abstreifkante 30 aufweisender, dem Kotauffangelement 18 zugewandter Schieberabschnitt 42 vorgesehen, an dem die Zähne 34, 34' und Zahnzwischenräume 36, 36' angeordnet sind. Der Schieberabschnitt 42 verläuft in einem Winkel α im Bereich von 91°-180° geneigt zum Befestigungsabschnitt 40.

Der Schieberabschnitt 42 erstreckt sich mit seinen in der vorliegend gezeigten Ausführung 32 Zähnen in Bewegungsrichtung R_{B} des Kotschiebers 24 schräg nach vorne. Wie ferner aus Fig. 2 ersichtlich, ist die verzahnte Kontur 32, bezogen auf die Längsachse A des Abstreifelements 28, asymmetrisch ausgebildet. Die Längsachse A des Abstreifelements 28 liegt vorliegend genau auf einem Übergangsbereich U zwischen einem Zahn 34 und einem Zahnzwischenraum 36, insbesondere auf einer Zahnflanke 44.

Die Zahnzwischenräume 36, 36' weisen an der Abstreifkante 30 in Längsrichtung R_{A} des Abstreifelements 28 Abmessungen, insbesondere eine Zahnzwischenraumbreite B_{W}, auf, die im Vergleich zu den Abmessungen der vorspringenden Zähne 34, 34', insbesondere der Zahnbreite B_{Z}, größer sind. Vorzugsweise ist die Zahnzwischenraumbreite B_{W} um das 1,1-Fache, bevorzugt mindestens um das 1,2-Fache größer als die Zahnbreite B_{Z}.

Wie die Fig. 2 und 3 zeigen, weist der Blattkörper 38 einen Abwurfabschnitt 46 auf, der die der Abstreifkante 30 gegenüberliegende Blattoberseite 48 des Blattkörpers 38 ausbildet. Der Abwurfabschnitt 46 verläuft ähnlich wie der Schieberabschnitt 42 in einem Winkel β im Bereich von 91°-180°, insbesondere in einem Winkel β von 135° geneigt zum Befestigungsabschnitt 40 am Abstreifelement.

Der Abwurfabschnitt 46 erstreckt sich in Längsrichtung R_{A} des Abstreifelements 28 nur entlang einer Teillänge des Befestigungsabschnitts 28. Auch der Abwurfabschnitt 46 ist schräg nach vorne in Bewegungsrichtung R_{B} des Abstreifelements 28 ausgerichtet.

Wie ferner aus Fig. 2 ersichtlich, weisen die am Schieberabschnitt 42 vorspringenden Zähne 34, 34' in ihrer jeweiligen Erstreckungsrichtung eine gleichmäßige Zahnbreite B_{Z} und die jeweils dazwischen ausgebildeten Zahnzwischenräume 36, 36' eine gleichmäßige Zahnzwischenraumbreite B_{W} auf. In einer nicht näher gezeigten Ausführungsform können die Zahnbreite B_{Z} wie auch die Zahnzwischenraumbreite B_{W} in Erstreckungsrichtung der Zähne größer bzw. kleiner werden, sodass die Zahnflanken 44 der Zähne 34, 34' keilförmig zueinander verlaufen.

In Fig. 4 ist exemplarisch eine unterhalb einer Aufenthaltsebene 14, 14' des Haltungssystems 10 anzuordnende Kotauffangeinrichtung 16 mit der oberhalb des Kotauffangelements 18 bewegbar, insbesondere verfahrbar angeordneten Kotabführeinheit 20 gezeigt. Die Kotabführeinheit 20 umfasst einen Kotschieber 24, der ein mit der Oberseite 22 des Kotauffangelements 18 zusammenwirkendes Abstreifelement 28 hat.

Das Abstreifelement 28 ist mit seinem Befestigungsabschnitt 40 an einem stabförmigen Halteteil 50 angeordnet, wobei das Abstreifelement 28 in einem Winkel δ von etwa 20° schräg zur Längsrichtung R_{L} des Kotauffangelements 18 ausgerichtet ist. Mit der Antriebseinheit 26 werden die Kotabführeinheit mit dem Kotschieber 24 entlang der Oberseite 22 des Kotauffangelements 18 verfahren und die sich auf dem Kotauffangelement 18 angesammelten Exkremente der Geflügeltiere über eine Längsseite 52, welche eine Abwurfkante 52' des Kotauffangelements 18 definiert, von diesem herunter bewegt und in eine unterhalb des Haltungssystems 10 vorhandene Güllegrube überführt.

Die Kotabführeinheit 20 umfasst ferner eine Schwenkeinheit 54 zum Ändern der Ausrichtung des Kotschiebers 24 relativ zum Kotauffangelement 18 in Abhängigkeit von der Bewegungsrichtung R_{B} des Kotschiebers 24 oberhalb des Kotauffangelements 18. Die Schwenkeinheit 54 umfasst ein Haltegestell 56, an dem ein Schwenklager 58 mit einer senkrecht zum Kotauffangelement 18 ausgerichteten Schwenkachse Z für den am Haltegestell 56 schwenkbar angelenkten Kotschieber 24 angeordnet ist.

Das Kotauffangelement 18 ist in der vorliegend gezeigten Ausführung ein Bandkörper 60, der in vorbestimmten Abständen in Längsrichtung R_{L} zumindest von seiner Unterseite aus abgestützt wird. Zudem wirkt mit dem Bandkörper 60 an zumindest einem seiner Enden 60' eine Spanneinrichtung 62 zum Spannen des Bandkörpers 60 in Längsrichtung R_{L} zusammen. In einer Ausführung weist die Spanneinrichtung 62 mehrere auf das Ende 60' des Bandkörpers 60 einwirkende Federelemente 64 auf, welche vorliegend als Zugfedern ausgebildet sind.

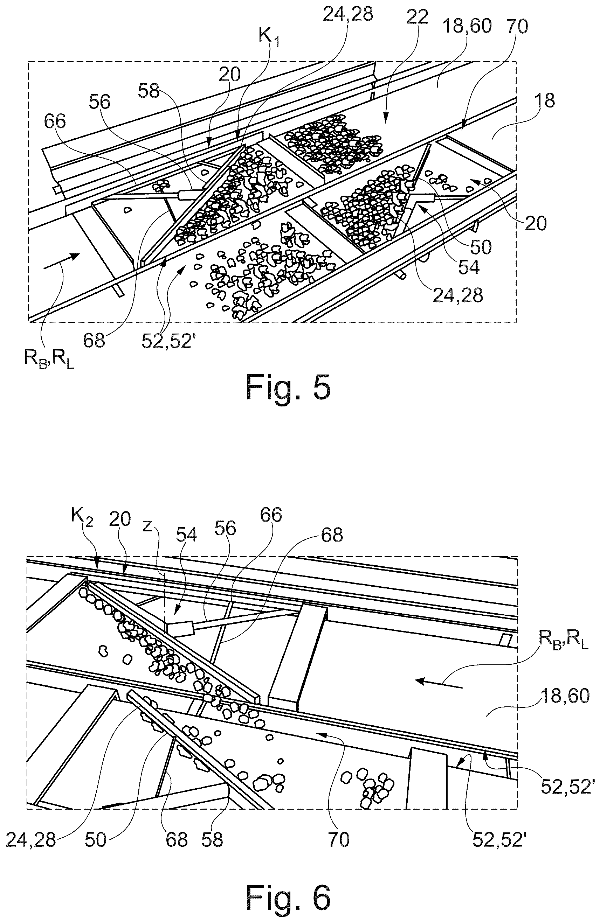

In den Fig. 5 und 6 ist eine vergrößerte Darstellung der in Fig. 4 gezeigten Kotauffangeinrichtung 16 mit der darüber hinweg bewegbaren Kotabführeinheit 20 zu sehen, wobei mehrere Kotauffangeinrichtungen 16 auf gleicher Höhe nebeneinander am Rahmengestell 12 des Haltungssystems 10 (Fig. 1) angeordnet sind.

Die Fig. 5 und 6 zeigen verschiedene Zeitpunkte innerhalb eines an der Kotauffangeinrichtung 16 durchgeführten Reinigungsprozesses. In Fig. 5 ist insbesondere die Bewegung der Kotabführeinheit 20 aus der in Fig. 4 gezeigten Ausgangsstellung P auf dem Hinweg mit dem in der Ausrichtung K₁ befindlichen Kotschieber 24 in eine an der Kotauffangeinrichtung 16 am entgegengesetzte Ende ausgebildete, nicht näher gezeigte Umkehrposition und in Fig. 6 die Bewegung der Kotabführeinheit 20 oberhalb der Kotauffangeinrichtung 16 von der Umkehrposition auf dem Rückweg mit dem in der Ausrichtung K₂ befindlichen Kotschieber 24 in die jeweilige Ausgangsstellung P an der Kotauffangeinrichtung 16 gezeigt.

Die oberhalb der Kotauffangeinrichtungen 16 beweglich aufgenommenen Kotabführeinheiten 20 werden jeweils in entgegengesetzte Richtungen zueinander betrieben. Ferner ist jeder Kotschieber 24 durch Ändern seiner Ausrichtung K₁, K₂ oberhalb des Auffangelements 18 in Verbindung mit der asymmetrischen Ausgestaltung der verzahnten Abstreifkante 30 am Abstreifelement 28, insbesondere der asymmetrischen Anordnung der verzahnten Abstreifkante 30 zu der mittels der Schwenkeinheit 54 definierten Schwenkachse Z, dazu eingerichtet, bei seiner Bewegung in entgegengesetzte Richtungen des Kotauffangelements 18 mit unterschiedlichen Flächenbereichen des Kotauffangelements 18 in Anlage zu stehen. Das Abstreifelement 28 mit seinen Zähnen kommt somit bei der in Fig. 5 gezeigten Hinbewegung des Reinigungsvorgangs unmittelbar mit Flächenbereichen des Kotauffangelements in Kontakt, die zu den Flächenbereichen des Kotauffangelements verschieden sind, mit denen die Zähne 34, 34' des Abstreifelements 28 unmittelbar bei der in Fig. 6 gezeigten Rückbewegung in Kontakt gelangen.

In einer alternativen Ausführung kann statt der asymmetrisch ausgebildeten Abstreifkante 30 am Abstreifelement 28 die verzahnte Abstreifkante, was nicht näher gezeigt ist, auch symmetrisch ausgeführt sein. Ein derart ausgeführtes Abstreifelement mit seiner symmetrisch ausgeführten, verzahnten Abstreifkante wird ebenfalls zum versetzten Inkontaktbringen mit der Oberseite 22 und beim Hin- und Rückbewegen oberhalb der Oberseite 22 des Kotauffangelements 18 und damit zur Umsetzung der ganzflächigen Reinigung des Kotauffangelements 18 asymmetrisch zu der durch das Schwenklager 58 der Schwenkeinheit 54 definierten Schwenkachse Z am Haltegestell 56 angeordnet.

Zum Verschwenken des Kotschiebers 24 weist die Schwenkeinheit 54 ein über Umlenkrollen 66 geführtes Zugelement 68 auf, welches mit Abschnitten des Kotschiebers 24 zu beiden Seiten des Schwenklagers 58 befestigt ist. Durch Verstellen des Zugelements 66 wird der Kotschieber 24 mit dem daran angeordneten Abstreifelement 28 in die jeweilige in Fig. 5 gezeigte Ausrichtung K₁ und in Fig. 6 gezeigte Ausrichtung K₂ oberhalb des Kotauffangelements 18 bewegt. Beim Bewegen der Kotschieber 24 über die nebeneinander angeordneten Kotauffangelemente 18 werden die Exkremente über die einander zugewandten Längsseiten 52 in einen zwischen den Kotauffangelementen 18 vorhandenen Spalt 70 abgeführt und in einer nicht näher gezeigten Güllegrube gesammelt.

Ähnliche oder gleiche Bauteile sind mit denselben Bezugszahlen versehen.

### Bezugszeichenliste:

- 10: Haltungssystem
- 12: Rahmengestell
- 14, 14': Aufenthaltsebene
- 16: Kotauffangeinrichtung
- 18: Kotauffangelement
- 20: Kotabführeinheit
- 22: Oberseite
- 24: Kotschieber
- 26: Antriebseinheit
- 28: Abstreifelement
- 30: Abstreifkante
- 32: verzahnte Kontur
- 34, 34': Zahn
- 36, 36': Zahnzwischenraum
- 38: Blattkörper
- 40: Befestigungsabschnitt
- 42: Schieberabschnitt
- 44: Zahnflanke
- 46: Abwurfabschnitt
- 48: Blattoberseite
- 50: Halteteil
- 52: Längsseite
- 52': Abwurfkante
- 54: Schwenkeinheit
- 56: Haltegestell
- 58: Schwenklager
- 60: Bandkörper
- 60': Ende
- 62: Spanneinrichtung
- 64: Federelement
- 66: Umlenkrolle
- 68: Zugelement
- 70: Spalt
- A: Längsachse
- B_{W}: Zahnzwischenraumbreite
- B_{Z}: Zahnbreite
- K₁: erste Ausrichtung
- K₂: zweite Ausrichtung
- P: Ausgangstellung
- R_{A}: Längsrichtung Abstreifelement
- R_{B}: Bewegungsrichtung
- R_{L}: Längsrichtung Kotauffangelement
- U: Übergangsbereich
- Z: Schwenkachse
- α, β: Winkel

## Patentansprüche

1. Haltungssystem (10) zur Aufzucht und Haltung von Geflügeltieren, mit
- einem Rahmengestell (12), und
- mehreren auf verschiedenen Höhen des Rahmengestells (12) angeordneten Aufenthaltsebenen (14, 14') für den Aufenthalt der Tiere,
wobei unterhalb wenigstens einer, insbesondere mehreren der Aufenthaltsebenen (14, 14') eine Kotauffangeinrichtung (16) mit einem im Wesentlichen horizontal verlaufenden Kotauffangelement (18) angeordnet ist, und
wobei jeder Kotauffangeinrichtung (16) wenigstens eine oberhalb des Kotauffangelements (18) bewegbare Kotabführeinheit (20) mit mindestens einem die Exkremente an der Oberseite (22) des Kotauffangelements (16) abführenden Kotschieber (24) zugeordnet ist,
**dadurch gekennzeichnet, dass** der Kotschieber (24) ein Abstreifelement (28) aufweist, welches eine mit der Oberseite (22) des Kotauffangelements (16) in Anlage stehende Abstreifkante (30) mit einer verzahnten Kontur (32) aufweist.

2. Haltungssystem (10) nach Anspruch 1,
**dadurch gekennzeichnet, dass** das Abstreifelement (28) einen Blattkörper (38) mit zumindest einem Befestigungsabschnitt (40) und einen die Abstreifkante (30) aufweisenden, dem Kotauffangelement (16) zugewandten Schieberabschnitt (42) aufweist.

3. Haltungssystem (10) nach Anspruch 2,
**dadurch gekennzeichnet, dass** der Befestigungsabschnitt (40) im Betrieb des Abstreifelements (28) im Wesentlichen vertikal ausgerichtet ist und der Schieberabschnitt (42) mit der Abstreifkante (30) in einem Winkel α im Bereich von 91°-180° zum Befestigungsabschnitt (40) verläuft.

4. Haltungssystem (10) nach einem der Ansprüche 1 bis 3,
**dadurch gekennzeichnet, dass** die verzahnte Kontur (32) abwechselnd aus vorspringenden Zähnen (34, 34'), welche mit dem Kotauffangelement (28) in Kontakt stehen, und zurückspringenden Zahnzwischenräumen (26, 26') ausgebildet ist.

5. Haltungssystem (10) nach einem der vorstehenden Ansprüche,
**dadurch gekennzeichnet, dass** die verzahnte Kontur (32) bezogen auf die Längsachse (R_{A}) des Abstreifelements (28) asymmetrisch ausgebildet ist.

6. Haltungssystem (10) nach Anspruch 4 oder 5,
**dadurch gekennzeichnet, dass** die Zahnzwischenräume (36, 36') an der Abstreifkante (30) in Längsrichtung (R_{A}) des Abstreifelements (28) Abmessungen aufweisen, die wenigstens dem 0,3-Fachen, vorzugsweise dem 0,9-Fachen, besonders bevorzugt mehr als dem 1,2-Fachen der Abmessungen der vorspringenden Zähne (34, 34') entsprechen.

7. Haltungssystem (10) nach einem der Ansprüche 2 bis 6,
**dadurch gekennzeichnet, dass** der Blattkörper (38) einen Abwurfabschnitt (46) aufweist, der die der Abstreifkante (30) gegenüberliegende Blattoberseite (48) des Blattkörpers (38) ausbildet.

8. Haltungssystem (10) nach Anspruch 7,
**dadurch gekennzeichnet, dass** der Abwurfabschnitt (46) in einem Winkel β im Bereich von 91°-180° zum Befestigungsabschnitt (40) verläuft und sich in Längsrichtung (R_{A}) des Abstreifelements (28) vorzugsweise nur entlang einer Teillänge des Befestigungsabschnitts (40) erstreckt.

9. Haltungssystem (10) nach einem der vorstehenden Ansprüche,
**dadurch gekennzeichnet, dass** die Kotabführeinheit (20) eine Antriebseinheit (26) zum Bewegen des Kotschiebers (24) in Längsrichtung (R_{L}) des Kotauffangelements (18) aufweist, wobei das Abstreifelement (28) im Betrieb in einem Winkel δ schräg zur Längsrichtung (R_{L}) des Kotauffangelements (18) ausgerichtet ist.

10. Haltungssystem (10) nach einem der vorstehenden Ansprüche,
**dadurch gekennzeichnet, dass** die Kotabführeinheit (20) eine Schwenkeinheit (54) zum Ändern der Ausrichtung (K₁ K₂) des Kotschiebers (24) relativ zum Kotauffangelement (18) in Abhängigkeit von der Bewegungsrichtung (R_{B}) des Kotschiebers (24) oberhalb des Kotauffangelements (18) aufweist.

11. Haltungssystem (10) nach Anspruch 10,
**dadurch gekennzeichnet, dass** der Kotschieber (24) durch Ändern seiner Ausrichtung (K₁ K₂) in Verbindung mit einer/der asymmetrischen Ausgestaltung der verzahnten Abstreifkante (30), bevorzugt einer asymmetrischen Anordnung der verzahnten Abstreifkante (30) zu einer mittels der Schwenkeinheit (54) definierten Schwenkachse (Z), dazu eingerichtet ist, bei seiner Bewegung in entgegengesetzte Richtungen (R_{B}) des Kotauffangelements (18) mit unterschiedlichen Flächenbereichen des Kotauffangelements (18) in Anlage zu stehen.

12. Haltungssystem (10) nach Anspruch 10 oder 11,
**dadurch gekennzeichnet, dass** durch Ändern der Ausrichtung (K₁ K₂) des Kotschiebers (24) bei seiner Bewegung in entgegengesetzte Richtungen (R_{B}) eine Kontaktposition zwischen der Oberseite (22) des Kotauffangelements (16) und dem Kotschieber (24) verändert wird.

13. Haltungssystem (10) nach einem der vorstehenden Ansprüche,
**dadurch gekennzeichnet, dass** das Kotauffangelement (18) einen Bandkörper (60) aufweist, der an zumindest einem seiner Enden (60') mit einer Spanneinrichtung (62) zum Spannen des Bandkörpers (60) in Längsrichtung (R_{L}) ausgerüstet ist,
und/oder
**dadurch gekennzeichnet, dass** mehrere Aufenthaltsebenen (14, 14') auf gleicher Höhe nebeneinander mit je einer Kotauffangeinrichtung (16) am Rahmengestell (12) angeordnet sind.

14. Abstreifelement (28) eines Kotschiebers (24) für eine Kotabführeinheit (20) an einem Haltungssystem (10) für Geflügeltiere, welches eine mit einer Oberseite (22) des Kotauffangelements (18) in Anlage stehende Abstreifkante (30) mit einer verzahnten Kontur (32) aufweist.

15. Verwendung eines Abstreifelements (28) nach Anspruch 14 zum Abführen von Kot an der Oberseite (22) eines Kotauffangelements (18) an einem Haltungssystem (10) für Geflügeltiere, wobei vorzugsweise das Abstreifelement (28) mit seiner verzahnten Abstreifkante (30) beim Bewegen in entgegengesetzte Richtungen (R_{B}) und dem Abführen der Exkremente oberhalb des Kotauffangelements (18) mit verschiedenen Flächenbereichen des Kotauffangelements (18) in Anlage steht.
